# EUROPEAN PATENT APPLICATION

(11) **EP 4 790 755 A1**
(43) Date of publication of application: **12.08.2026**
(21) Application number: 25209463.6
(22) Date of filing: 17.10.2025
(51) Int. Cl.: H01M 4/13, H01M 4/04, H01M 4/139

(54) **ELECTRODE PLATE FOR SECONDARY BATTERIES AND SECONDARY BATTERY INCLUDING THE SAME**

(30) Priority: 06.02.2025 KR 20250014960
(71) Applicant: SAMSUNG SDI CO., LTD., Yongin-si, Gyeonggi-do 17084 (KR)
(72) Inventor: KO, Hee Jung, 17084 Yongin-si, Gyeonggi-do (KR); HONG, Chong Gi, 17084 Yongin-si, Gyeonggi-do (KR)
(74) Representative: Bardehle Pagenberg Partnerschaft mbB Patentanwälte Rechtsanwälte

(57) **Abstract**

An electrode plate (1000) for secondary batteries, the electrode plate including an electrode current collector and an active material layer coated on at least one surface of the electrode current collector. The active material layer includes a concave portion (1210, 2210, 3210, 4210, 5210, 6210-6212, 7210-7213, 8210, 9210) disposed in a pattern on at least a part (14, 15) of the active material layer.

## Description

### BACKGROUND

### 1. Field

Embodiments of the present disclosure relate to an electrode plate for secondary batteries and a secondary battery including the electrode plate.

### 2. Description of the Related Art

Unlike a primary battery, a secondary battery may be charged and discharged. Low-capacity secondary batteries having a single battery cell packaged in the form of a pack are widely employed in small, portable electronic devices, such as smart phones, feature phones, laptop computers, digital cameras, camcorders, and the like, while large-capacity secondary batteries are widely used as power sources for driving motors in hybrid vehicles, electric vehicles, and the like, as well as batteries for power storage. The secondary battery includes an electrode assembly consisting of a positive electrode and a negative electrode, a case that accommodates the electrode assembly, and electrode terminals connected to the electrode assembly.

The above information disclosed in this Background section is only for enhancement of understanding of the background of the invention and therefore it may contain information that does not constitute prior art.

### SUMMARY

According to the present invention, an electrode plate as claimed in claim 1 is provided. Preferred embodiments of the invention are described in the dependent claims. Embodiments of the present disclosure provide an electrode plate for secondary batteries including a concave portion formed in a part of an active material layer constituting an electrode plate to improve the electrolyte impregnation characteristics, thereby improving the rate capability (i.e., capacity retention under high C-rate charge/discharge conditions), and a secondary battery including the same.

However, the technical problems to be achieved in the embodiment of the disclosure are not limited to the technical problems mentioned above, and other technical problems not mentioned herein will be clearly understood from the following description by those skilled in the art to which the disclosure belongs.

An electrode plate for secondary batteries according to some embodiments of the present disclosure to accomplish the above object may include an electrode current collector and an active material layer coated on at least one surface of the electrode current collector. The active material layer may include a concave portion disposed in a pattern on at least a part of the active material layer.

In some embodiments, the concave portion may have any one of a circular recess cross-sectional structure, a triangular recess cross-sectional structure, and a prismatic recess cross-sectional structure.

In some embodiments, the concave portion may have at least two of a circular recess cross-sectional structure, a triangular recess cross-sectional structure, and a prismatic recess cross-sectional structure.

In some embodiments, the concave portion may include any one of a dot pattern, a diagonal pattern, a transverse stripe pattern, a longitudinal stripe pattern, and a plaid pattern.

In some embodiments, the concave portion may include at least two of a dot pattern, a diagonal pattern, a transverse stripe pattern, a longitudinal stripe pattern, and a plaid pattern.

In some embodiments, the concave portion may be provided in an entirety of only one surface of the active material layer.

In some embodiments, the concave portion may be provided in some areas of one surface of the active material layer and not in other areas of the one surface of the active material layer.

In some embodiments, a width of the some areas where the concave portion may be provided may be 20% to 60% of a width of the active material layer.

In some embodiments, the concave portion may be provided on the one surface of the active material layer along a longitudinal centerline of the electrode current collector.

In some embodiments, the concave portion may include a plurality of concave portions provided on the one surface of the active material layer so as to be spaced at regular intervals along a longitudinal centerline of the electrode current collector.

In some embodiments, the concave portion may include a plurality of concave portions provided on the one surface of the active material layer, the plurality of concave portions provided in a zigzag pattern with respect to a longitudinal centerline of the electrode current collector.

In some embodiments, the concave portion may include a plurality of concave portions provided on the one surface of the active material layer, the plurality of concave portions provided on the one surface of the active material layer being in a checkerboard pattern.

In some embodiments, a depth of the concave portion may be less than or equal to a maximum thickness of the active material layer.

In some embodiments, the concave portion may be formed through at least a part of the active material layer in a thickness direction.

In some embodiments, the active material layer may include a first active material layer coated on a first surface of the electrode current collector and a second active material layer coated on a second surface of the electrode current collector.

In some embodiments, a first concave portion and a second concave portion may be formed, in a same shape, respectively in the first active material layer and the second active material layer.

In some embodiments, a first concave portion may be formed in the first active material layer in one shape. A second concave portion may be formed in the second active material layer in a different shape than the one shape.

In some embodiments, the active material layer may be a dry active material layer and the electrode current collector may be provided on one surface of the dry active material layer or provided between the one surface and another surface opposite of the one surface.

In some embodiments, the electrode current collector may have a shape selected from among a sheet, a foil, a film, a plate, a porous body, a mesoporous body, a body containing a through-hole, a polygonal ring body, a mesh body, a foam body, and a nonwoven body.

A secondary battery according to an embodiment of the present disclosure to accomplish the above object may include a first electrode plate, a second electrode plate, and an electrolyte disposed between the first electrode plate and the second electrode plate. The first electrode plate, the second electrode plate, or a combination of the first electrode plate and the second electrode plate may be the electrode plate for secondary batteries as described above.

### BRIEF DESCRIPTION OF THE DRAWINGS

The following drawings attached to this specification illustrate preferred embodiments of the present disclosure and serve to further understand the technical idea of the present disclosure together with the detailed description of the present disclosure, and thus, the present disclosure should not be construed as being limited to the matters described in such drawings.
FIG. 1 is a perspective view of an electrode plate for secondary batteries according to one or more embodiments of the present disclosure.
FIGS. 2 to 10 are plan views of the electrode plate according to one or more embodiments of the present disclosure.
FIGS. 11 to 16 are sectional views of the electrode plate, taken along line A-A' of FIG. 1 according to one or more embodiments of the present disclosure.
FIG. 17 is a perspective view showing a secondary battery according to one or more embodiments of the present disclosure.
FIG. 18 is a sectional view of the secondary battery shown in FIG. 17 according to one or more embodiments of the present disclosure.
FIG. 19 is a schematic view of a secondary battery according to one or more embodiments of the present disclosure.
FIG. 20 is a schematic view of a secondary battery according to one or more embodiments of the present disclosure.
FIG. 21 is a schematic view of a secondary battery according to one or more embodiments of the present disclosure.
FIG. 22 is a perspective view illustrating a secondary battery according to one or more embodiments of the present disclosure.
FIG. 23 is a cross-sectional view taken along the line II-II in FIG. 22 according to one or more embodiments of the present disclosure.
FIG. 24 is a perspective view illustrating a battery module according to one or more embodiments of the present disclosure.
FIGS. 25 and 26 show a battery pack according to one or more embodiments of the present disclosure.
FIGS. 27 and 28 show a vehicle body and vehicle body parts having a battery pack according to one or more embodiments of the present disclosure.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. Therefore, the embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application. In addition, it will be understood that the terms "comprise or include" and/or "comprising or including," when used in this specification, specify the presence of stated features, integers, steps, operations, elements, and/or components but do not preclude the presence or addition of one or more other features, integers, steps, operations, elements, components, and/or groups thereof. In addition, when describing embodiments of the present disclosure, the wording "may ~" or "may be~" may include "one or more embodiments of the present disclosure."

In addition, for a better understanding of the invention, the attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," etc., may be used herein to describe various components, these components should not be limited by these terms. These terms are used to distinguish one component from another component. Thus, unless otherwise defined, a first component described below could be termed a second component, without departing from the spirit and scope of the present disclosure.

Throughout the specification, the singular forms are intended to include the plural forms as well, unless the context clearly indicates otherwise.

The arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

Also, it will be understood that when an element is referred to as being "coupled to," "linked to," or " "connected to" another element, these elements can be directly coupled or connected to each other, another intervening element may be present therebetween, or the respective elements may be coupled, linked, or connected to each other through another elements. In addition, it will be understood that when an element is referred to as being electrically coupled to another element, the element can be directly connected to another element or an intervening element may be present therebetween such that the element and another element are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

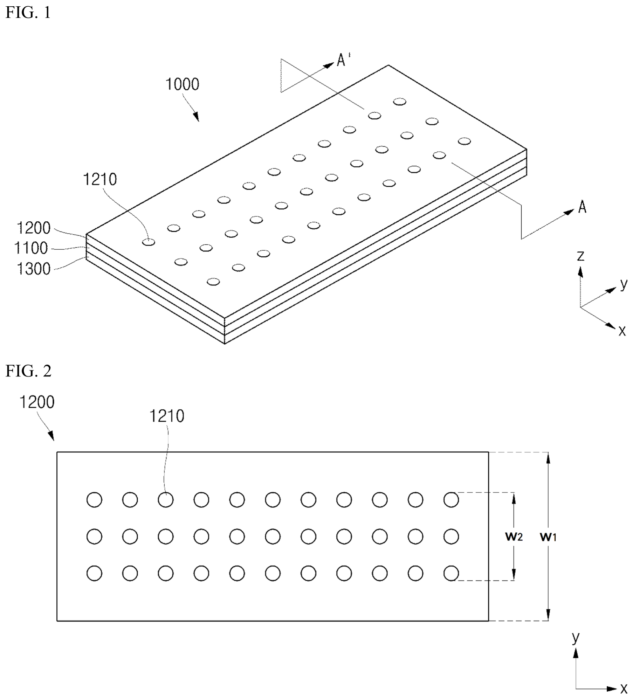

FIG. 1 is a perspective view of an electrode plate for secondary batteries according to one or more embodiments of the present disclosure.

Referring to FIG. 1, the electrode plate 1000 for secondary batteries according to the embodiment may include an electrode current collector 1100, a first active material layer 1200 disposed on one surface of the electrode current collector 1100, and a second active material layer 1300 disposed on the other surface of the electrode current collector 1100. The electrode current collector 1100 may be made of a thin metal sheet.

The material constituting the electrode current collector 1100 may be any material that does not react with lithium, i.e., a material that does not form an alloy or compound with lithium and is conductive. For example, the material constituting the electrode current collector 1100 may be a metal or an alloy. For example, the metal may be indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. For example, the electrode current collector 1100 may have a shape selected from a sheet, a foil, a film, a plate, a porous body, a mesoporous body, a body containing through-holes, a polygonal ring body, a mesh body, a foam body, and a nonwoven body. However, the present disclosure is not necessarily limited thereto, and any shape used in the art may be used herein.

The first active material layer 1200 may be provided on at least one surface of the electrode current collector 1100. The second active material layer 1300 may be provided on at least the other surface of the electrode current collector 1100, which is opposite the first active material layer 1200.

The electrode plate 1000 may be a dry electrode. Each of the first active material layer 1200 and the second active material layer 1300 may include or be referred to as a dry active material layer. The dry active material layer may be included in or referred to as a dry electrode film. The electrode current collector 1100 may be disposed on one surface of the dry active material layer, or may be disposed between the one surface and the other surface, which is opposite the one surface.

"Dry" as used herein means a state of not being intentionally in contact with a solvent such as a processing solvent or a state of not intentionally containing a solvent. For example, a dry conductive agent means a conductive agent that is not intentionally in contact with a solvent or a conductive agent that does not intentionally contain a solvent. For another example, a dry binder means a binder that is not intentionally in contact with a solvent or a binder that does not intentionally contain a solvent, or a binder that is not mixed with a solvent and is in a liquid state at room temperature is a dry binder.

A dry electrode plate is an electrode manufactured through a dry process in which an electrode active material and a binder are mixed and compressed without a solvent. Because no solvent is used, the dry electrode plate may be eco-friendly, and the manufacturing process may be simplified. The current density of the dry electrode plate may be approximately 5.5 mA/cm², which is higher than the current density (approximately 4.5 mA/cm²) of a wet electrode plate. This means that the dry electrode plate can handle more current or have higher output characteristics in the same area. Because the current density of the dry electrode plate is high, the loading level (L/L) of the dry electrode plate may be high, and more active materials may be required per unit area. As a result, the electrode plate may be thicker.

For the dry electrode plate, ion conductivity may be reduced and electrical resistance may increase, making it difficult to maintain a uniform electrochemical reaction in the entirety of the electrode. As a result, the electrode plate may not be properly impregnated with an electrolyte. Degradation may occur in a central part of the electrode plate (e.g., a centerline area located in a longitudinal direction [x-direction]), and a degradation band may be observed. If degradation becomes severe, Li precipitation may occur during the life of the electrode plate. If the length and size of the electrode plate increase, the entirety of the electrode plate may not be properly impregnated with the electrolyte.

A concave portion may be provided in a section where electrolyte impregnation does not properly occur to induce impregnation. Therefore, the cycle characteristics, such as rate capability, of a secondary battery including the dry electrode plate having the concave portion may be improved.

FIGS. 2 to 10 are plan views of the electrode plate according to one or more embodiments of the present disclosure. FIGS. 2 to 10, which show one surface of the electrode plate 1000, may be plan views of the first active material layer 1200. FIGS. 2 to 10 show only the first active material layers 1200, 2200, 3200, 4200, 5200, 6200, 7200, 8200, and 9200 with an uncoated portion omitted, and the uncoated portion may be located on the left or right side or the top or bottom in the figures.

Referring to FIG. 2, the first active material layer 1200 may include one or more concave portions 1210 disposed in a specific pattern in at least a part of the first active material layer 1200. The one or more concave portions 1210 may be provided in one or more areas of one surface of the first active material layer 1200 located on one surface of the electrode current collector 1100, and not in other areas of the one surface of the first active material layer 1200. The one or more concave portions 1210 may be provided along a centerline of the first active material layer 1200 in the longitudinal direction (x-direction). For example, if the width w₁ of the first active material layer 1200 is evenly divided by 5 into 5 portions and the width w₁ of the first active material layer 1200 is from the top of the 1/5^{th} portion to the bottom of the 5/5^{ths} portion, an area of a concave portion 1210 may be located from the top of the 2/5^{ths} portion to the bottom of the 4/5^{ths} portion to have a width w₂. The width w₂ of one or more areas where the one or more concave portions 1210 are disposed may be approximately 20% to 60% of the width w₁ of the first active material layer 1200.

The one or more concave portions 1210 may be disposed in a dot pattern. All of the one or more concave portions 1210 disposed in the dot pattern may be referred to as a collective concave portion.

Each dot of the dot pattern in which the one or more concave portions 1210 are disposed may be referred to as a single concave portion. Further, the collective concave portion may include a plurality of single concave portions spaced at regular intervals along the longitudinal centerline of the first active material layer 1200.

A diameter of each single concave portion and/or the interval between the concave portions may be set within the range that creates adequate substrate adhesion depending on the material of the electrode plate 1000.

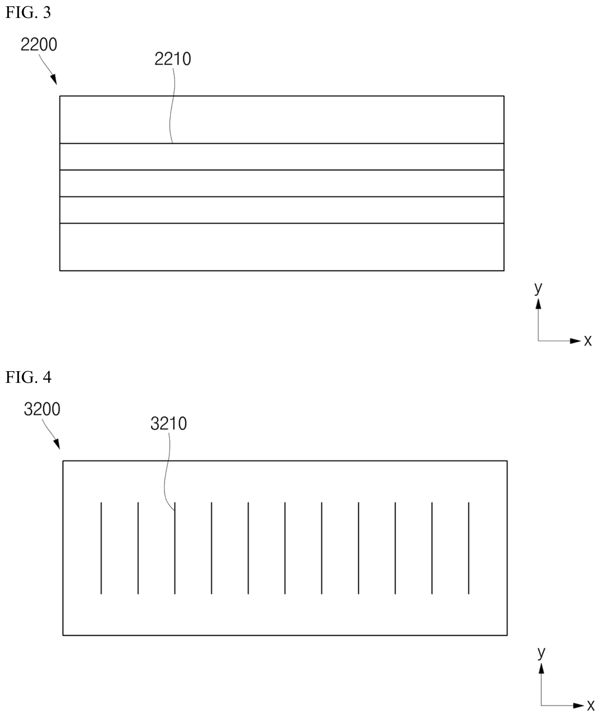

Referring to FIG. 3, the first active material layer 2200 may include one or more concave portions 2210 disposed in a specific pattern in at least a part of the first active material layer 2200. The one or more concave portions 2210 may be provided in one or more areas of one surface of the first active material layer 2200 located on one surface of the electrode current collector 1100. The one or more concave portions 2210 may be provided along a longitudinal centerline of the first active material layer 2200. A width of one or more areas where the one or more concave portions 2210 are disposed may be approximately 20% to 60% of a width of the first active material layer 2200.

The one or more concave portions 2210 may be disposed in a transverse stripe pattern (i.e., a stripe pattern with [longitudinally extending] stripes laid in a transverse direction [y-direction]). For example, the transverse stripe pattern may include pattern of longitudinally extending lines disposed in the transverse direction. The one or more concave portions 2210 may be formed from end to end of the first active material layer 2200 parallel to the longitudinal centerline of the first active material layer 2200.

The one or more concave portions 2210 disposed in the stripe pattern may be collectively referred to as a collective concave portion. Each straight line of the stripe pattern in which the one or more concave portions 2210 are disposed may be referred to as a single concave portion. Thus, the collective concave portion may include a plurality of single concave portions spaced at regular intervals in a width direction (y-direction) of the first active material layer 2200.

A width of each single concave portion and/or the interval between the concave portions may be set within the range that secures adequate substrate adhesion depending on the material of the electrode plate 1000.

Referring to FIG. 4, the first active material layer 3200 may include one or more concave portions 3210 disposed in a specific pattern in at least a part of the first active material layer 3200. The one or more concave portions 3210 may be provided in one or more areas of one surface of the first active material layer 3200 located on one surface of the electrode current collector 1100. The one or more concave portions 3210 may be provided along a longitudinal centerline of the first active material layer 3200. A width of one or more areas where the one or more concave portions 3210 are disposed may be approximately 20% to 60% of a width of the first active material layer 3200.

The one or more concave portions 3210 may be disposed in a longitudinal stripe pattern. For example, the longitudinal stripe pattern may be a linear pattern with each stripe extending in a width direction. The one or more concave portions 3210 may be spaced at regular intervals along the longitudinal centerline of the first active material layer 3200.

The one or more concave portions 3210 disposed in the stripe pattern may be collectively referred to as a collective concave portion.

Each straight line of the stripe pattern in which the one or more concave portions 3210 are disposed may be referred to as a single concave portion. Further, the collective concave portion may include a plurality of single concave portions spaced at regular intervals in a longitudinal direction of the first active material layer 3200.

A width of each single concave portion and/or the interval between the concave portions may be set within the range that secures adequate substrate adhesion depending on the material of the electrode plate 1000.

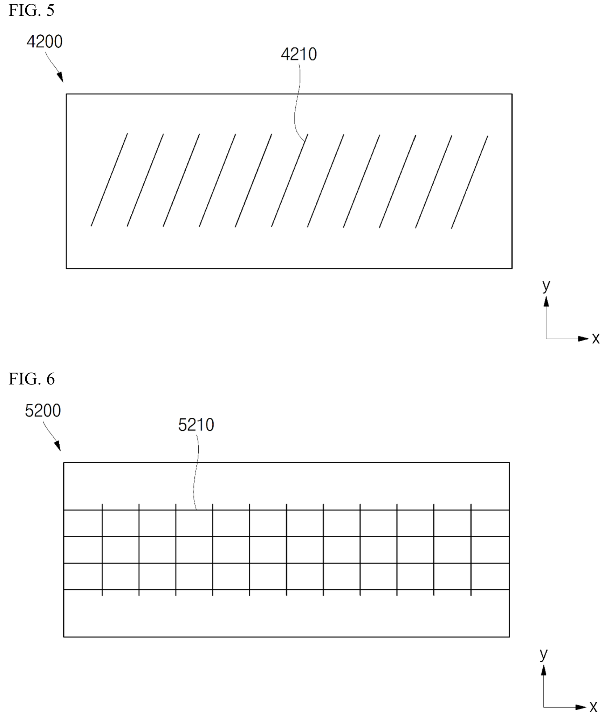

Referring to FIG. 5, the first active material layer 4200 may include one or more concave portions 4210 disposed in a specific pattern in at least a part of the first active material layer 4200. The one or more concave portions 4210 may be provided in one or more areas of one surface of the first active material layer 4200 located on one surface of the electrode current collector 1100. The one or more concave portions 4210 may be provided along a longitudinal centerline of the first active material layer 4200. A width of one or more areas where the one or more concave portions 4210 are disposed may be approximately 20% to 60% of a width of the first active material layer 4200.

The one or more concave portions 4210 may be disposed in a diagonal pattern with respect to the longitudinal direction. The one or more concave portions 4210 may be spaced at regular intervals along the longitudinal centerline of the first active material layer 4200.

The one or more concave portions 4210 disposed in the diagonal pattern may be collectively referred to as a collective concave portion.

Each straight line of the diagonal pattern in which the one or more concave portions 4210 are disposed may be referred to as a single concave portion. Thus, the collective concave portion may include a plurality of single concave portions spaced at regular intervals in a longitudinal direction of the first active material layer 4200.

A width of each single concave portion and/or the interval between the concave portions may be set within a range that secures adequate substrate adhesion depending on the material of the electrode plate 1000.

Referring to FIG. 6, the first active material layer 5200 may include one or more concave portions 5210 disposed in a specific pattern in at least a part of the first active material layer 5200. The one or more concave portions 5210 may be provided in one or more areas of one surface of the first active material layer 5200 located on one surface of the electrode current collector 1100. The one or more concave portions 5210 may be provided along a longitudinal centerline of the first active material layer 5200. A width of one or more areas where the one or more concave portions 5210 are disposed may be approximately 20% to 60% of a width of the first active material layer 5200.

The one or more concave portions 5210 may be disposed in a plaid pattern. For example, the plaid pattern may be a grid pattern in which transverse and longitudinal straight lines intersect.

The one or more concave portions 5210 disposed in the plaid pattern may be collectively referred to as a collective concave portion. A width of the one or more concave portions 5210, the collective concave portion, and/or the grid size (e.g., the interval between the horizontal and vertical lines) may be set within the range that secures adequate substrate adhesion depending on the material of the electrode plate 1000.

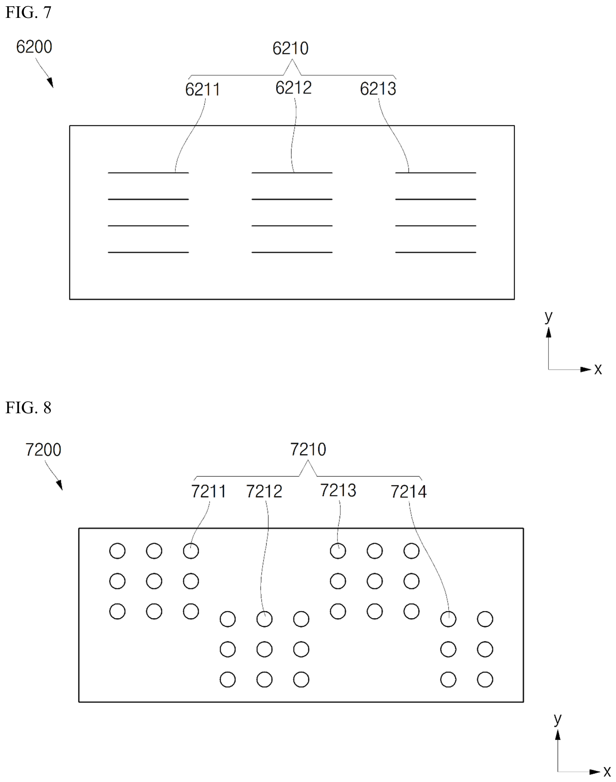

Referring to FIG. 7, the first active material layer 6200 may include concave portions 6210 disposed in a specific pattern in at least a part of the first active material layer 6200. The concave portions 6210 may be provided in one or more areas of one surface of the first active material layer 6200 located on one surface of the electrode current collector 1100. The concave portions 6210 may be provided along a longitudinal centerline of the first active material layer 6200. A width of one or more areas where the concave portions 6210 are disposed may be approximately 20% to 60% of a width of the first active material layer 6200.

The concave portions 6210 may include rows of concave portions 6211, 6212, and 6213 spaced at regular intervals along the longitudinal centerline of the first active material layer 6200. In FIG. 7, the rows of concave portions 6211, 6212, and 6213 are shown as each having a transverse stripe pattern of longitudinally extending stripes separated in a transverse row, but the plurality of concave portions 6211, 6212, and 6213 may also be disposed in at least one of a dot pattern, a diagonal pattern, a longitudinal stripe pattern, and a plaid pattern. The plurality of concave portions 6211, 6212, and 6213 may all be of the same pattern type, or may be of different pattern types.

A width of the rows of concave portions 6211, 6212, and 6213, an interval between the rows of concave portions, and/or an interval between two single concave portions may be set within the range that secures adequate substrate adhesion depending on the material of the electrode plate 1000. The width of the rows of concave portions 6211, 6212, and 6213, the interval between the rows of concave portions, and/or the interval between two single concave portions, may all be the same or different.

Referring to FIG. 8, the first active material layer 7200 may include concave portions 7210 disposed in a specific pattern in at least a part of the first active material layer 7200. The concave portions 7210 may be provided in one or more areas of one surface of the first active material layer 7200 located on one surface of the electrode current collector 1100. The concave portions 7210 may include a plurality of concave portions 7211, 7212, 7213, and 7214 disposed in a zigzag pattern with respect to a longitudinal centerline of the first active material layer 7200. The plurality of concave portions 7211, 7212, 7213, and 7214 may be disposed in a checkerboard pattern. Referring to FIG. 8, each of the plurality of concave portions 7211, 7212, 7213, and 7214 may include a plurality of recesses. Each of the plurality of recesses may form a dot pattern.

In FIG. 8, the plurality of concave portions 7211, 7212, 7213, and 7214 are shown as each including a dot pattern, but the plurality of concave portions 7211, 7212, 7213, and 7214 may each include at least one of a diagonal pattern, a transverse stripe pattern, a longitudinal stripe pattern, and a plaid pattern. The plurality of concave portions 7211, 7212, 7213, and 7214 may all include a same pattern type, or may include different pattern types from each other.

A width of the plurality of concave portions 7211, 7212, 7213, and 7214, an interval between recesses of each concave portion of the plurality of concave portions 7211, 7212, 7213, and 7214, and/or an interval between the concave portions of the plurality of concave portions 7211, 7212, 7213, and 7214 may be set within the range that secures adequate substrate adhesion depending on the material of the electrode plate 1000. Further, the width of the plurality of concave portions 7211, 7212, 7213, and 7214, the interval between recesses of each concave portion of the plurality of concave portions 7211, 7212, 7213, and 7214, and/or the interval between the concave portions of the plurality of concave portions 7211, 7212, 7213, and 7214may all be the same or different.

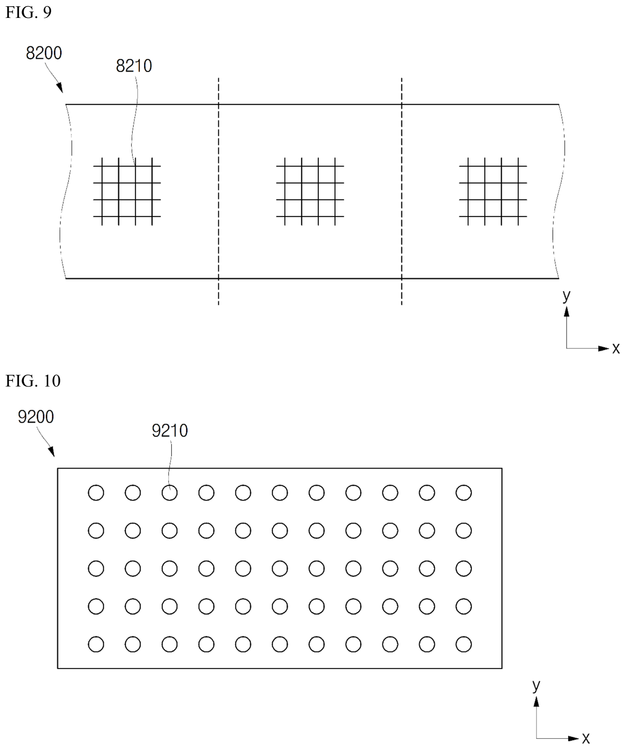

Referring to FIG. 9, the first active material layer 8200 may include concave portions 8210 disposed in a specific pattern in at least a part thereof. The concave portions 8210 may be provided in one or more areas of one surface of the first active material layer 8200 located on one surface of the electrode current collector 1100.

The concave portions 8210 may be provided in a central region of the first active material layer 8200. The concave portions 8210 may be provided in the central region within a set range (i.e., a range divided by dotted lines in FIG. 9) of the first active material layer 8200. Further, the entire sheet of the electrode current collector 1100 may be wound, folded, or cut along the dotted lines.

A width of one or more areas where the concave portions 8210 are disposed may be approximately 20% to 60% of a width of the first active material layer 8200.

The concave portions 8210 may each be disposed in a plaid pattern. For example, the plaid pattern may be a grid pattern in which transverse and longitudinal straight lines intersect. The width of the concave portions 8210 and/or the grid size (e.g., the interval between the horizontal and vertical lines) may be set within the range that secures adequate substrate adhesion depending on the material of the electrode plate 1000.

In FIG. 9, the concave portions 8210 are shown as being disposed in a plaid pattern, but the concave portions 8210 may be disposed in at least one of a dot pattern, a diagonal pattern, a transverse stripe pattern, and a longitudinal stripe pattern.

Referring to FIG. 10, the first active material layer 9200 may include concave portions 9210 disposed in a specific pattern in at least a part thereof. The concave portions 9210 may be provided in an entirety of the first active material layer 9200 located on one surface of the electrode current collector 1100.

The concave portions 9210 may include a dot pattern. The concave portions 9210 may also include at least one of a diagonal pattern, a transverse stripe pattern, a longitudinal stripe pattern, and a plaid pattern.

A diameter (or a width) of the dots of the dot pattern (or single concave portions) and/or the interval between the single concave portions may be set within the range that secures adequate substrate adhesion depending on the material of the electrode plate 1000.

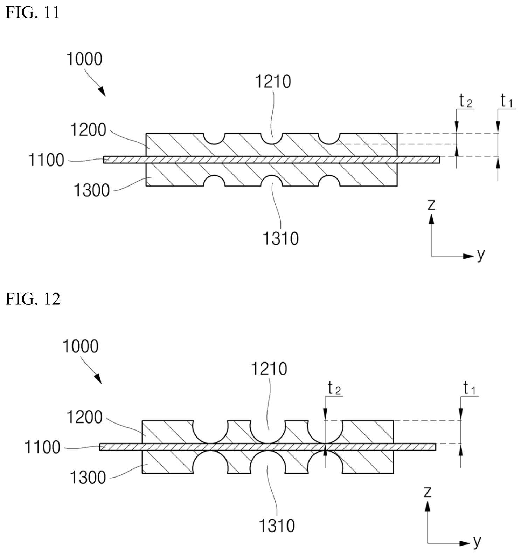

FIGS. 11 to 16 are sectional views of the electrode plate, taken along line A-A' of FIG. 1 according to one or more embodiments of the present disclosure.

Referring to FIG. 11, the concave portion 1210 may have a circular recess cross-sectional structure. A depth t₂ of the concave portion 1210 may be less than a maximum thickness t₁ of the first active material layer 1200.

Referring to FIG. 12, the depth t₂ of the concave portion 1210 may be equal to the maximum thickness t₁ of the first active material layer 1200. The concave portion 1210 may be formed through at least a part of the first active material layer 1200 in the thickness direction (z-direction).

For example, the depth t₂ of the concave portion 1210 may be less than the maximum thickness t₁ of the first active material layer 1200, and if the depth t₂ of the concave portion 1210 is equal to the maximum thickness t₁ of the first active material layer 1200, the concave portion 1210 may be formed through the first active material layer 1200 in the thickness direction. The depth t₂ of the concave portion 1210 may be set based on balancing a design of the electrode plate between electrode capacity and electrolyte impregnation.

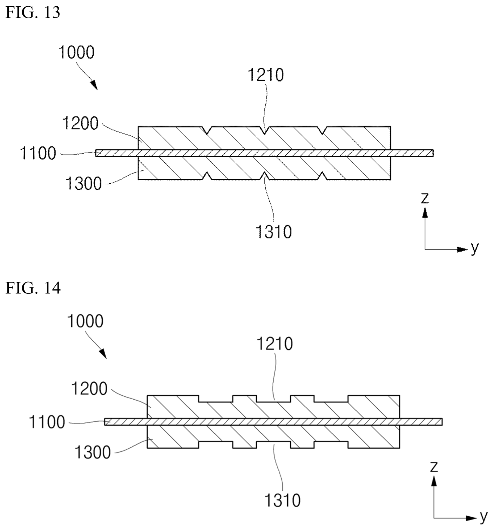

Referring to FIG. 13, the concave portion 1210 may have a triangular recess cross-sectional structure.

Referring to FIG. 14, the concave portion 1210 may have a prismatic recess cross-sectional structure. "Prismatic" means a figure with angles, which may include a polygon such as a quadrangle.

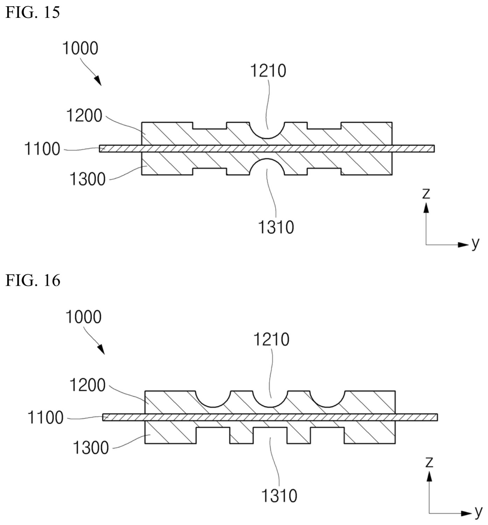

Referring to FIG. 15, the concave portion 1210 may have a cross-sectional structure including at least two of a circular recess, a triangular recess, and a prismatic recess. The concave portion 1210 may have a cross-sectional structure in which a circular recess is formed in the center and a prismatic recess is formed at an outer side. A deeper recess may be formed in the center of the concave portion 1210, and a shallower recess may be formed at the outer side of the concave portion 1210. The center may not be impregnated, and therefore the center may have a deeper or more easily impregnated shape.

In some examples, the concave portion 1210 may be formed in the first active material layer 1200, and the concave portion 1310 may be formed in the second active material layer 1300. For the sake of convenience, the description may be made with reference to the concave portion 1210 of the first active material layer 1200, but the same description may also apply to the concave portion 1310 of the second active material layer 1300. Referring to FIGS. 11 to 15, the concave portions 1210 and 1310 may have the same shape.

Referring to FIG. 16, the concave portion 1210 of the first active material layer 1200 and the concave portion 1310 of the second active material layer 1300 may have different shapes. Alternatively, the concave portion 1210 may be formed only in the first active material layer 1200, and the concave portion 1310 may not be formed in the second active material layer 1300.

A shape, depth, etc. of the concave portion 1210 may be set within the range that secures adequate substrate adhesion depending on a material of the electrode plate 1000.

The concave portion 1210 may be processed in various ways to form micro-holes in the surface of the dry electrode plate, thereby improving electrolyte impregnation. For example, a laser may be used to form precise and uniform micro-holes in a surface of the electrode plate. High temperature and energy of the laser may enable rapid and precise hole formation and may be applied even to high-strength materials. Holes may be formed in the surface of the electrode plate by injecting a liquid into a specific position. The injected liquid may be solidified during a drying process, thus forming the holes. This method may form various types of holes depending on the type of a solvent and the injection method based on desired characteristics. Holes may be formed by pressing a needle-shaped roller against the surface of the electrode plate. As the roller rotates, the roller may apply pressure to the electrode plate at regular intervals to physically form the holes. This method may be suitable for mass production because it is possible to easily and quickly implement repetitive patterns. A regularly protruding or depressed pattern may be formed in the surface of the electrode plate using an embossing roller. A roller having an array of circular protrusions may be rotated to press the surface of the electrode plate to form a regular pattern. If micro-irregularities are formed at the surface of the electrode through embossing, the surface area may be increased, which may improve the electrolyte impregnation effect. The embossed pattern may increase the contact efficiency of the electrode, which may promote the electrochemical reaction and contribute to increasing the structural strength of the electrode plate. This processing method may efficiently form consistent patterns, for example, in mass production.

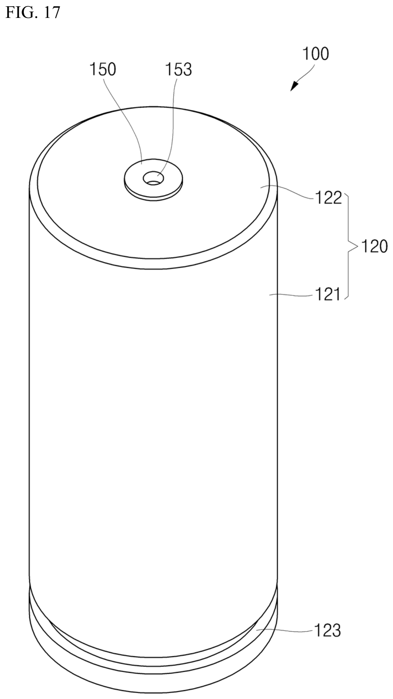

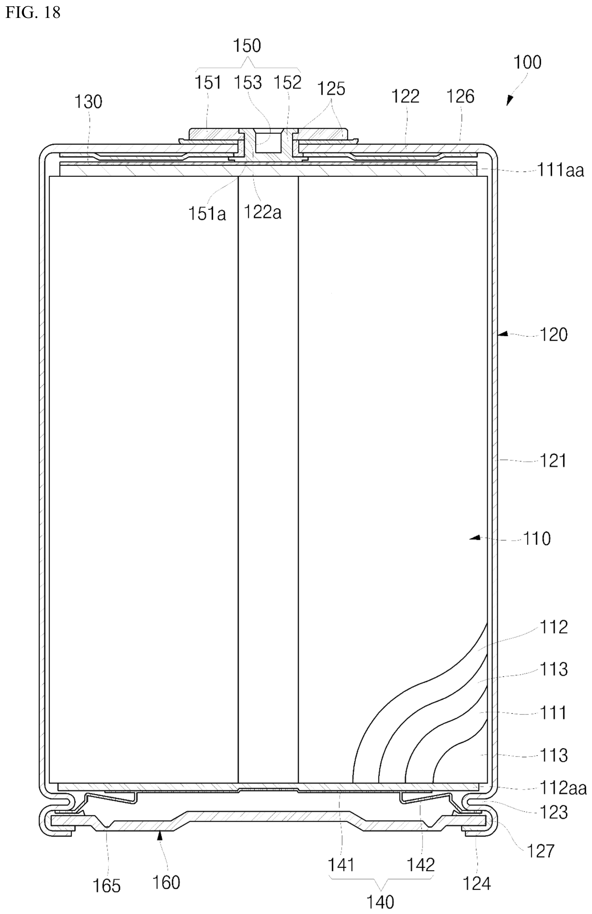

FIG. 17 is a perspective view showing a secondary battery according to one or more embodiments of the present disclosure. FIG. 18 is a sectional view of the secondary battery shown in FIG. 17 according to one or more embodiments of the present disclosure. The secondary battery 100 of FIGS. 17 and 18 may include a first electrode plate 111 (such as, for example, a positive electrode plate), a second electrode plate 112 (such as, for example, a negative electrode plate), and an electrolyte disposed between the first electrode plate 111 and the second electrode plate 112, wherein the first electrode plate 111, the second electrode plate 112, or a combination thereof may be the electrode plate 1000 for secondary batteries. The first electrode plate 111 may be a positive electrode plate, and the second electrode plate 112 may be a negative electrode plate.

As shown in FIGS. 17 and 18, the secondary battery 100 according to the present disclosure may include an electrode assembly 110 and a case 120 configured to receive the electrode assembly 110 and the electrolyte therein. The case 120 together with a terminal 150 and a cap plate 160, can form the outer shape of the secondary battery 100. The case 120 may include a body portion 121 having a roughly cylindrical shape, and an upper portion 122 connected to one side of the body portion 121. A beading part 123 deformed toward the inside may be positioned on the body portion 121, and a crimping part 124 bent toward the inside may be positioned on the end of an opening side of the body portion 121. The terminal hole 122a penetrating the center of the upper portion 122 may be provided. The upper portion 122 may be coupled by inserting the terminal 150 into the terminal hole 122a. A terminal gasket 125 for sealing and electrical insulation may be further interposed between the terminal hole 122a and the terminal 150. The upper portion (122) may further be provided with an insulating member 126 on the inner surface to prevent or reduce contact with the electrode assembly 110.

The secondary battery 100 may further include a positive electrode current collecting plate 130 configured to electrically connect the first electrode plate 111 of the electrode assembly 110 and the terminal 150 to each other and a negative electrode current collecting plate 140 configured to electrically connect the second electrode plate 112 of the electrode assembly 110 and the case 120 to each other. In the positive electrode current collector plate 130, one surface thereof (e.g., a lower surface) may be in contact with and coupled to the positive electrode tab (positive electrode uncoated portion 111aa) of the electrode assembly 110, and the other surface thereof (e.g., an upper surface) opposite to the one surface may be in contact with and coupled to the terminal 150. The negative electrode current collector plate 140 generally has a center portion 141 that may be in contact with and joined to the negative electrode tab (negative electrode uncoated portion 112aa) of the electrode assembly 110 and an edge portion 142 that may be in contact with and coupled to the body portion 121 of the case 120.

The electrode assembly 110 may include a separator 113 and a first electrode plate 111 and a second electrode plate 112 positioned such that the separator 113 is interposed therebetween, and the electrode assembly 110 may be wound in a jelly-roll shape.

The first electrode plate 111 may include a positive electrode substrate and a positive electrode active material layer located on at least one surface of the positive electrode substrate. A positive electrode tab 111aa may extend outward from a positive electrode uncoated portion of the positive electrode substrate where the positive electrode active material layer is not located, and the positive electrode tab 111aa may be electrically connected to the terminal 150 through the positive electrode current collecting plate 130. The second electrode plate 112 may include a negative electrode substrate and a negative electrode active material layer located on the negative electrode substrate. A negative electrode tab 112aa may extend outward from a negative electrode uncoated portion of the negative electrode substrate where the negative electrode active material layer is not located, and the negative electrode tab 112aa may be electrically connected to the case 120 through the negative electrode current collecting plate 140.

The positive electrode tab 111aa and the negative electrode tab 112aa may be located in the electrode assembly 110 in opposite directions. The positive electrode substrate of the first electrode plate 111 may be made of aluminum foil, and the positive electrode active material layer may include, for example, a transition metal oxide. The negative electrode substrate of the second electrode plate 112 may be made of copper foil or nickel foil, and the negative electrode active material layer may include, for example, graphite.

The separator 113 may have a function of preventing short circuit between the first electrode plate 111 and the second electrode plate 112 while allowing a migration of lithium ions. For example, the separator 113 may be made of a polyethylene film, a polypropylene film, or a polyethylene-polypropylene film.

The terminal 150 may include a terminal plate 151 positioned on the outside of the case 120, and a fastening member 152 penetrating the terminal plate 151 and the case 120 to then be coupled thereto. The terminal plate 151 may have a terminal hole 151a passing through the center thereof. The fastening member 152 may penetrating the terminal hole 122a of the upper portion 122 and the terminal hole 151a of the terminal plate 151 from the inside of the case 120 to then be fixed by pressing the terminal plate 151. A terminal gasket 125 for electrical insulation may be interposed between the terminal 150 and the case 120. In addition, the fastening member 152 may further be provided with a terminal groove 153 in an inward direction from the center.

The cap plate 160 may be fixed to the inside of the crimping part 124 through the cap gasket 127 to seal the case 120. The cap plate 160 may include a safety vent 165 that is thinner than other areas due to a notch.

In some examples, as the positive electrode active material, a compound capable of reversibly intercalating/deintercalating lithium (e.g., a lithiated intercalation compound) may be used. Specifically, at least one of a composite oxide of lithium and a metal selected from cobalt, manganese, nickel, and combinations thereof may be used.

The composite oxide may be a lithium transition metal composite oxide, and specific examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA₁₋₈X₈O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0< α<2); LiₐNi_{1-b-c}Mn_{b}X_{c}O_{2-α}D_{α} (0.90≤a≤1.8, 0≤b≤0.5, 0≤c≤0.5, 0< α <2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂GpO₄ (0.90≤a≤1.8, 0.001≤b≤0.1); LiₐMn_{1-g}G_{g}PO₄ (0.90≤a≤ 1.8, 0≤g≤0.5); Li_{(3-f)}Fe₂(PO₄)₃ (0≤f≤2); and LiₐFePO₄ (0.90 ≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for lithium secondary batteries may include a current collector (e.g., a first substrate) and a positive electrode active material layer formed on the current collector. The current collector may be included in the electrode current collector 1100 of FIG. 1, and the positive electrode active material layer may be included in the first active material layer 1200 and the second active material layer 1300. The positive electrode active material layer may include a positive electrode active material, and may further include a binder and/or a conductive agent.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

As the current collector, aluminum (Al), but not limited thereto, may be used.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. For example, the silicon-carbon composite may be in the form of a silicon particle and amorphous carbon coated on the surface of the silicon particle. The silicon-carbon composite may further include crystalline carbon. For example, the silicon-carbon composite may include a core including crystalline carbon and silicon particle and an amorphous carbon coating layer on the surface of the core.

A negative electrode for lithium secondary batteries may include a current collector (e.g., a second substrate) and a negative electrode active material layer formed on the current collector. The current collector may be included in the electrode current collector 1100 of FIG. 1, and the negative electrode active material layer may be included in the first active material layer 1200 and the second active material layer 1300. The negative electrode active material layer may include a negative electrode active material and may further include a binder and/or a conductive agent.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, a dry binder, or a combination thereof may be used as the binder. The dry binder may be a binder that is not impregnated, dissolved, or dispersed in a processing solvent, for example, during the manufacture of a dry active material layer. The dry binder may be a binder that contains a processing solvent or is not in contact with the processing solvent, for example, during the manufacture of a dry active material layer. The dry binder may be a fibrillized binder or a fibrous binder. The fibrillized binder or the fibrous binder may serve as a matrix configured to support and bind the dry electrode active material and other components. The fibrillized binder or the fibrous binder may have an aspect ratio of, for example, 10 or more, 20 or more, 50 or more, or 100 or more. The dry binder may include, for example, a binder fibrillized in a machine direction (MD) of the dry active material layer. Therefore, a tensile strength of the dry active material layer in the longitudinal direction may be greater than the tensile strength of the dry active material layer in the width direction.

The dry binder may include, for example, polytetrafluoroethylene (PTFE), a polyvinylidene fluoride-hexafluoropropylene (PVDF-HFP) copolymer, polyvinylidene fluoride (PVDF), polyvinyl alcohol (PVA), polyacrylonitrile (PAN), carboxymethyl cellulose (CMC), starch, hydroxypropyl cellulose, cellulose, polyvinylpyrrolidone (PVP), polyethylene (PE), polypropylene (PP), ethylene-propylene-diene monomer (EPDM) rubber, sulfonated-EPDM rubber, styrene butadiene rubber (SBR), fluorine-containing rubber, or any combination thereof; however, the present disclosure is not limited thereto. Any binder for a manufacture of dry electrodes may be used. The dry binder may include, for example, a fluorinated binder. The fluorinated binder may be, for example, polytetrafluoroethylene (PTFE), a polyvinylidene fluoride-hexafluoropropylene (PVDF-HFP) copolymer, polyvinylidene fluoride (PVDF), or a combination thereof.

The glass transition temperature (Tg) of the dry binder may be, for example, from about -30°C to about 150°C, from about 15°C to about 150°C, from about 15°C to about 130°C, from about 50°C to about 130°C, from about 100°C to about 130°C, or from about 120°C to about 130°C. The glass transition temperature (Tg) of a first dry binder may be, for example, from about -30°C to about 150°C, from about 15°C to about 150°C, from about 15°C to about 130°C, from about 50°C to about 130°C, from about 100°C to about 130°C, or from about 120°C to about 130°C, which are independent of each other. The glass transition temperature (Tg) of a second dry binder may be, for example, from about -30°C to about 150°C, from about 15°C to about 150°C, from about 15°C to about 130°C, from about 50°C to about 130°C, from about 100°C to about 130°C, or from about 120°C to about 130°C, which are independent of each other. The glass transition temperature of polytetrafluoroethylene (PTFE) may be, for example, from about 120°C to about 130°C. If the dry binder has a glass transition temperature within the above ranges, the fibrillized binder or the fibrous binder may be easily obtained during a dry electrode manufacturing process.

The content of the dry binder may be, for example, from about 0.1 wt% to about 5 wt%, from about 0.5 wt% to about 4 wt%, or from about 1 wt% to about 3 wt% of the total weight of the dry active material layer. If the dry active material layer includes the dry binder within the above ranges, a binding strength of the dry active material layer may be improved, and the dry active material layer may maintain high energy density. The content of the dry binder may be, for example, from about 0.1 wt% to about 5 wt%, from about 0.5 wt% to about 4 wt%, or from about 1 wt% to about 3 wt% of the total weight of the dry active material layer.

The dry active material layer may further include, for example, a conductive agent. The conductive agent may be, for example, a dry conductive agent. The dry conductive agent may be a conductive agent that is not impregnated, dissolved, or dispersed in a processing solvent, for example, during the process of manufacturing the dry active material layer. The dry conductive agent may be a conductive agent that contains a processing solvent or is not in contact with the processing solvent, for example, during the manufacture of the dry active material layer. In some embodiments, the dry conductive agent may include a carbon-based conductive agent. In some embodiments, the carbon-based conductive agent may include a fibrous carbon-based material having an aspect ratio of 10 or more, a particulate carbon-based material having an aspect ratio of 5 or less, or a combination thereof.

The fibrous carbon-based material having an aspect ratio of 10 or more may be, for example, carbon fibers, carbon nanotubes, or carbon nanobelts. However, the present disclosure is not limited thereto, and any carbon-based conductive agent known in the art may be used.

The particulate carbon-based material having an aspect ratio of 5 or less may be, for example, carbon black, acetylene black, Ketjen black, natural graphite, or synthetic graphite. However, the present disclosure is not limited thereto, and any carbon-based conductive agent known in the art may be used. The aspect ratio of the particulate carbon-based material may be, for example, from 1 to 5, from 1 to 4, from 1 to 3, or from 1 to 2.

The content of the dry conductive agent included in the dry active material layer may be, for example, from about 0.1 wt% to about 5 wt%, from about 0.5 wt% to about 4 wt%, or from about 1 wt% to about 3 wt% of the total weight of the dry active material layer. If the dry active material layer includes the dry conductive agent within the above ranges, the conductivity of the dry active material layer may be improved, and the cycle characteristics of a lithium battery including the dry active material layer may be improved.

The dry active material layer may be free of a residual processing solvent. The dry active material layer may be free of a residual processing solvent intentionally used because the dry active material layer includes the dry binder and the dry conductive agent and no processing solvent is used in the process of manufacturing the dry active material layer. In some embodiments, the dry active material layer may not include any intentionally added processing solvent because the dry active material layer may be manufactured in a dry process. For example, the dry active material layer may not include a residual processing solvent. Although a very small amount of unintended solvent may remain in the dry active material layer, this solvent may not be an intentionally added processing solvent. Therefore, the dry active material layer may be distinguished from a wet electrode active material layer, which is manufactured by mixing ingredients and a processing solvent and drying the mixture to remove some or all of the processing solvent.

The electrode current collector may include, for example, a base film and a metal layer disposed on one surface or both surfaces of the base film. The electrode current collector may include a substrate, and the substrate may have a structure including, for example, a base film and a metal layer disposed on one surface or both surfaces of the base film. The base film may include, for example, a polymer. The polymer may be, for example, a thermoplastic polymer. In some embodiments, the polymer may include polyethylene terephthalate (PET), polyethylene (PE), polypropylene (PP), polybutylene terephthalate (PBT), polyimide (PI), or any combination thereof. If the base film includes a thermoplastic polymer, the base film may melt in the event of short circuit, thereby suppressing a rapid increase in current. The base film may be an insulator. The metal layer may include, for example, copper (Cu), stainless steel, titanium (Ti), iron (Fe), cobalt (Co), nickel (Ni), or an alloy thereof. The metal layer may serve as an electrochemical fuse, and may be cut in the event of overcurrent, thereby performing a short circuit protection function. A thickness of the metal layer may be adjusted to control the limiting current and the maximum current. The metal layer may be plated or deposited on the base film. If the thickness of the metal layer decreases, the limiting current and/or the maximum current of the electrode current collector may decrease, whereby the stability of the lithium battery in the event of short circuit may be improved. For connection with the outside, a lead tab may be added to the metal layer. The lead tab may be welded to the metal layer or a metal layer/base film laminate by ultrasonic welding, laser welding, spot welding, etc. During welding, the base film and/or the metal layer may melt, and the metal layer may be electrically connected to the lead tab. In order to more reliably weld the metal layer and the lead tab, a metal chip may be added between the metal layer and the lead tab. The metal chip may be a flake of the same material as the metal of the metal layer. In some embodiments, the metal chip may be metal foil or metal mesh. In some embodiments, the metal chip may be aluminum foil, copper foil, or SUS foil. If the metal chip is disposed on the metal layer and the lead tab is welded thereto, the lead tab may be welded to a metal chip/metal layer laminate or a metal chip/metal layer/base film laminate. During welding, the base film, the metal layer, and/or the metal chip may melt, whereby the metal layer or the metal layer/metal chip laminate may be electrically connected to the lead tab.

The metal chip and/or the lead tab may be added to a part of the metal layer. The thickness of the base film may be, for example, from about 1 µm to about 50 µm, from about 1.5 µm to about 50 µm, from about 1.5 µm to about 40 µm, or from about 1 µm to about 30 µm. If the base film has the thickness within the above ranges, the weight of the electrode assembly may be more effectively reduced. In some embodiments, the melting point of the base film may be from about 100°C to about 300°C, from about 100°C to about 250°C, or from about 100°C to about 200°C. If the base film has the melting point within the above ranges, the base film may melt during the process of welding the lead tab, whereby the base film may be easily coupled to the lead tab.

In order to improve the adhesion between the base film and the metal layer, surface treatment such as corona treatment may be performed on the base film. In some embodiments, a thickness of the metal layer may be from about 0.01 µm to about 3 µm, from about 0.1 µm to about 3 µm, from about 0.1 µm to about 2 µm, or from about 0.1 µm to about 1 µm.

If the metal layer has the thickness within the above ranges, stability of the electrode assembly may be achieved while conductivity is maintained. In some embodiments, a thickness of the metal chip may be from about µm 2 to about 10 µm, from about 2 µm to about 7 µm, or from about 4 µm to about 6 µm. If the metal chip has a thickness within the above ranges, the metal layer and the lead tab may be more easily connected to each other. If the electrode current collector has the above structure, the weight of the electrode may be reduced, and, as a result, energy density may be improved.

The electrolyte for lithium secondary batteries may include a non-aqueous organic solvent and lithium salt.

The non-aqueous organic solvent may serve as a medium through which ions involved in the electrochemical reaction of the battery may move.

The non-aqueous organic solvent may be a carbonate-based solvent, an ester-based solvent, an ether-based solvent, a ketone-based solvent, an alcohol-based solvent, an aprotic solvent, or any combination thereof, and the non-aqueous organic solvent may be used alone or in a mixture of two or more solvents.

If the carbonate-based solvent is used, a mixture of cyclic carbonate and chain-type carbonate may be used.

In some embodiments, the electrolyte may be an organic electrolyte. The organic electrolyte may be prepared by dissolving lithium salt in an organic solvent. Any organic solvent known in the art may be used. For example, the organic solvent may be propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolan, 4-methyldioxolan, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or any mixture thereof.

Any lithium salt known in the art may be used. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are natural numbers), LiCl, LiI, or any mixture thereof.

The electrolyte may be a solid electrolyte. The solid electrolyte may be, for example, boron oxide or lithium oxynitride. However, the present disclosure is not limited thereto, and any solid electrolyte known in the art may be used. The solid electrolyte may be formed on the negative electrode using a method such as sputtering, or a separate solid electrolyte sheet may be stacked on the negative electrode. The solid electrolyte may be, for example, an oxide-based solid electrolyte or a sulfide-based solid electrolyte.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator 113 may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are stacked on each other.

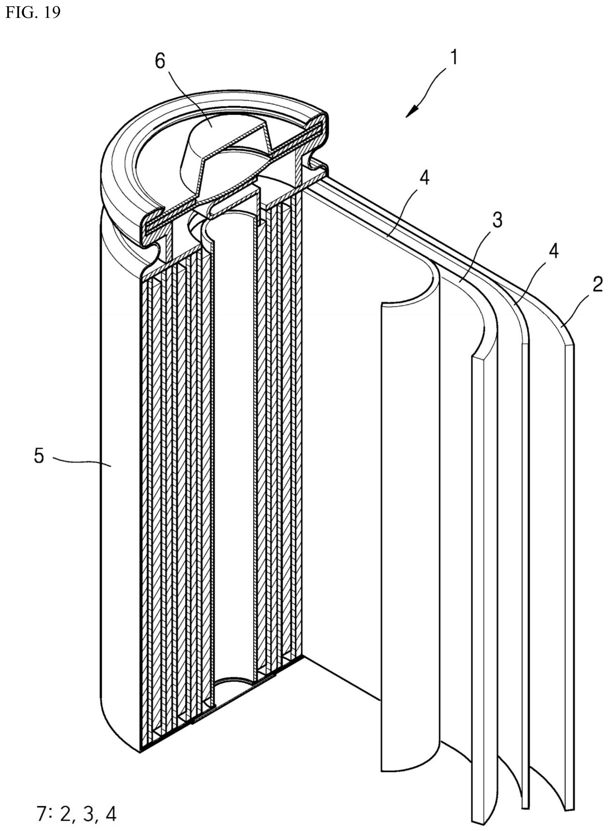

FIG. 19 is a schematic view of a secondary battery according to one or more embodiments of the present disclosure.

Referring to FIG. 19, the lithium secondary battery 1 according to the embodiment may include a positive electrode 3, a negative electrode 2, and a separator 4. The positive electrode 3, the negative electrode 2, and the separator 4 may be wound or folded to form a battery structure 7. The formed battery structure 7 may be received in a battery case 5. The battery case 5 may be filled with an organic electrolyte and sealed with a cap assembly 6, whereby the lithium secondary battery 1 may be completed. The battery case 5 may be cylindrical. However, the present disclosure is not necessarily limited thereto, and the battery case 5 may be, for example, prismatic or of a thin film type.

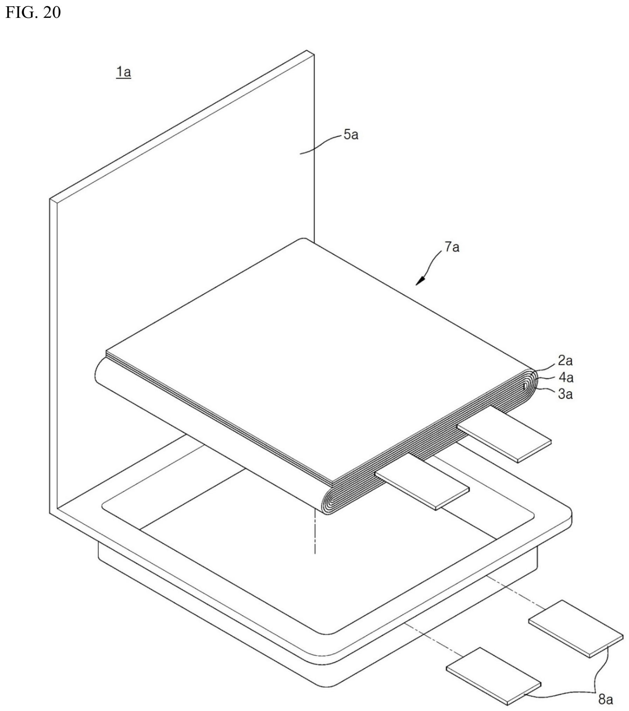

FIG. 20 is a schematic view of a secondary battery according to one or more embodiments of the present disclosure.

Referring to FIG. 20, a lithium secondary battery 1a according to some embodiments of the present disclosure may include a positive electrode 3a, a negative electrode 2a, and a separator 4a. The separator 4a may be disposed between the positive electrode 3a and the negative electrode 2a, and the positive electrode 3a, the negative electrode 2a, and the separator 4a may be wound or folded to form a battery structure 7a. The battery structure 7a may be placed in a battery case 5a. The lithium secondary battery 1a may include an electrode tab 8a configured to serve as an electrical path for guiding a current generated in the battery structure 7a toward the outside. The battery case 5a may be filled with an organic electrolyte and sealed, whereby the lithium secondary battery 1a may be completed. The battery case 5a may be prismatic. However, the present disclosure is not necessarily limited thereto, and the battery case 5a may be, for example, cylindrical or of a thin film type.

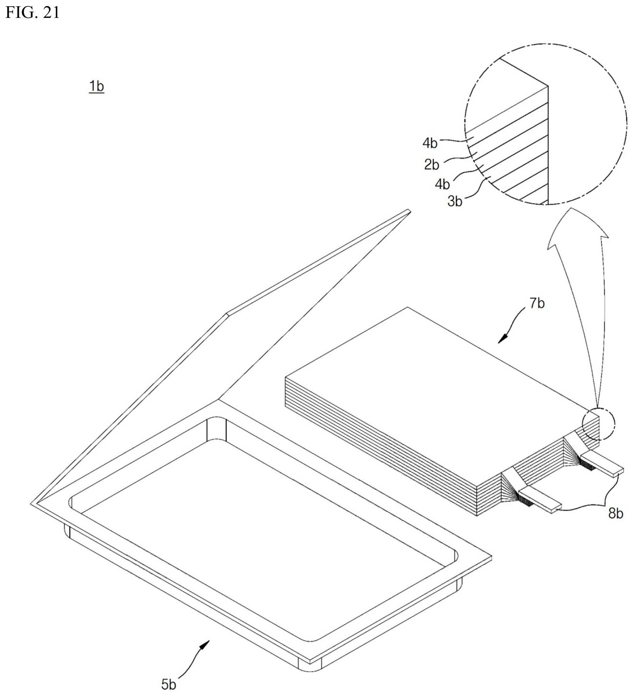

FIG. 21 is a schematic view of a secondary battery according to one or more embodiments of the present disclosure.

Referring to FIG. 21, a lithium secondary battery 1b according to some embodiments may include a positive electrode 3b, a negative electrode 2b, and a separator 4b. The separator 4b may be disposed between the positive electrode 3b and the negative electrode 2b to form a battery structure 7b. The battery structure 7b may be stacked in a bicell structure and then received in a battery case 5b. The lithium secondary battery 1b may include an electrode tab 8b configured to serve as an electrical path for guiding current formed in the battery structure 7b to the outside. The battery case 5b may be filled with an organic electrolyte and sealed, whereby the lithium secondary battery 1b may be completed. The battery case 5b may be prismatic. However, the present disclosure is not necessarily limited thereto, and the battery case 5b may be, for example, cylindrical or of a thin film type.

A pouch-shaped secondary battery may correspond to one of the secondary batteries of FIG. 20 to 21, wherein a pouch is used as the battery case. The pouch-shaped secondary battery may include one or more battery structures. A separator may be disposed between a positive electrode and a negative electrode to form a battery structure. The battery structure may be stacked into a bicell structure, impregnated with an organic electrolyte, received in the pouch, and sealed to complete a pouch-shaped lithium battery. For example, although not shown in the figures, the positive electrode, the negative electrode, and the separator may be simply stacked and may be received in the pouch in the shape of an electrode assembly, or the positive electrode, the negative electrode, and the separator may be wound or folded into a jelly roll type electrode assembly and then may be received in the pouch. Subsequently, the pouch may be filled with an organic electrolyte and may be sealed to complete the lithium secondary battery.

The lithium secondary battery may be used in an electric vehicle (EV) because the lithium secondary battery has excellent life characteristics and rate capability. For example, the lithium secondary battery may be used in a hybrid vehicle such as a plug-in hybrid electric vehicle (PHEV). The lithium secondary battery may be used in applications that require a large amount of power. For example, the lithium secondary battery may be used in an electric bicycle and a power tool.

A plurality of lithium secondary batteries may be stacked to form a battery module, and a plurality of battery modules may be connected to each other to form a battery pack. The battery pack may be used in all devices that require high capacity and high output. For example, the battery pack may be used in a laptop computer, a smartphone, and an electric vehicle. The battery module may include, for example, a plurality of batteries and a frame configured to hold the batteries. The battery pack may include, for another example, a plurality of battery modules and a busbar configured to connect the battery modules to each other. The battery module and/or the battery pack may further include a cooler. A plurality of battery packs may be controlled by a battery management system. The battery management system may include a battery pack and a battery controller connected to the battery pack.

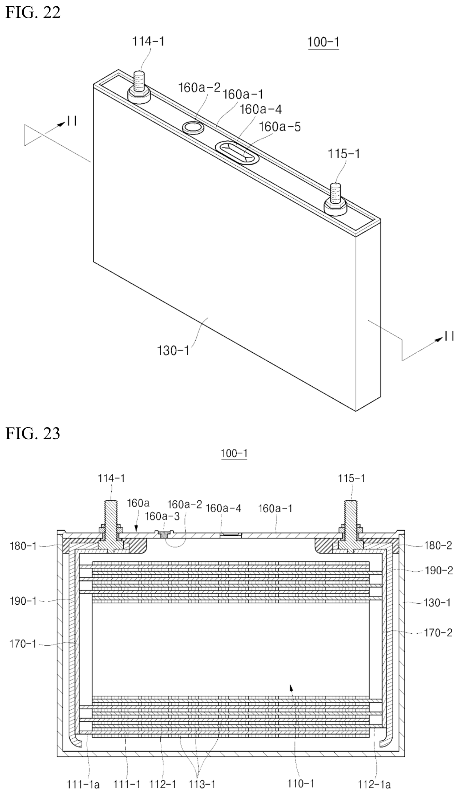

FIG. 22 is a perspective view illustrating a secondary battery 100-1 according to one or more embodiments of the present disclosure, and FIG. 23 is a cross-sectional view taken along the line II-II in FIG. 22 according to one or more embodiments of the present disclosure.

Referring to FIGS. 22 and 23, the secondary battery 100-1 according to one or more embodiments of the present disclosure may include at least one electrode assembly 110-1 wound with a separator 113-1 as an insulator between the negative electrode 111-1 and the positive electrode 112-1, a case 130-1 in which the electrode assembly 110-1 is received (or accommodated) therein, and a cap assembly 160a coupled to an opening of the case 130-1.

The secondary battery 100-1 according to one or more embodiments will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the negative electrode 111-1 and the positive electrode 112-1 may include a current collector made of a thin metal foil having a coated portion on which an active material is coated and an uncoated portion 111-1a, 112-1a on which an active material is not coated.

The negative electrode 111-1 and the positive electrode 112-1 are wound after interposing the separator 113-1, which is an insulator, therebetween. However, the present disclosure is not limited thereto, and the electrode assembly 110-1 may have a structure in which the negative electrode 111-1 and the positive electrode 112-1, each made of a plurality of sheets, are alternately stacked with a separator interposed therebetween.

The case 130-1 may form the overall outer appearance of the secondary battery 100-1 and may be made of a conductive metal, such as aluminum, aluminum alloy, or nickel-plated steel. In addition, the case 130-1 may provide a space in which the electrode assembly 110-1 is accommodated.

The cap assembly 160a may include a cap plate 160a-1 covering an opening in the case 130-1, and the case 130-1 and the cap plate 160a-1 may be made of a conductive material. The negative electrode terminal 114-1 and the positive terminal 115-1 electrically connected to the negative electrode 111-1 and the positive electrode 112-1, respectively, may be installed to penetrate (or extend through) the cap plate 160a-1 and protrude outwardly therethrough.

In addition, outer peripheral surfaces (e.g., circumferential surfaces) of upper pillars of the negative and positive electrode terminals 114-1 and 115-1 protruding outwardly from the cap plate 160a-1 may be threaded and may be fixed to the cap plate 160a-1 by utilizing nuts.

However, the present disclosure is not limited thereto, and the negative and positive electrode terminals 114-1 and 115-1 may have a rivet structure and may be riveted or welded to the cap plate 160a-1.

In addition, the cap plate 160a-1 may be made of a thin plate and may be coupled to the opening in the case 130-1, and an electrolyte injection port 160a-2 into which a sealing stopper 160a-3 may be installed may be located (e.g., formed) in the cap plate 160a-1, and a vent portion 160a-4 having a notch 160a-5 may be installed in the cap plate 160a-1.

The negative and positive electrode terminals 114-1 and 115-1 may be electrically connected to current collectors including first and second current collectors 170-1 and 170-2 (hereinafter referred to as positive and negative current collectors) by being bonded or coupled (e.g., by welding) to the negative electrode uncoated portion 111-1a and the positive electrode uncoated portion 112-1a, respectively.

For example, the negative and positive electrode terminals 114-1 and 115-1 may be coupled by welding to the negative and positive electrode current collectors 170-1 and 170-2, respectively. However, the present disclosure is not limited thereto, and the negative and positive electrode terminals 114-1 and 115-1 and the negative and positive electrode current collectors 170-1 and 170-2 may be integrally formed in one or more embodiments.

In addition, an insulator may be installed between the electrode assembly 110-1 and the cap plate 160a-1. The insulator may include first and second lower insulators 180-1 and 180-2, and each of the first and second lower insulators 180-1 and 180-2 may also have a portion located between the electrode assembly 110-1 and the cap plate 160a-1.

In addition, according to one or more embodiments of the present disclosure, one end of a separator may face one side of the electrode assembly 110-1 and may be installed between the insulator and the negative or positive electrode terminals 114-1 and 115-1.

In one or more embodiments, the separator may include first and second separator 190-1 and 190-2.

In such an embodiment, first ends of the first and second separators 190-1 and 190-2 installed to face one side of the electrode assembly 110-1 may be respectively installed between the first and second lower insulators 180-1 and 180-2 and the negative and positive electrode terminals 114-1 and 115-1.

Accordingly, the negative and positive electrode terminals 114-1 and 115-1, which may be coupled by welding to the negative and positive electrode current collectors 170-1 and 170-2, may be coupled to first ends of the first and second lower insulators 180-1 and 180-2 and the first and second separators 190-1 and 190-2.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooler to remove the generated heat and thereby suppress deterioration of the battery cell. The cooler may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, overcharge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

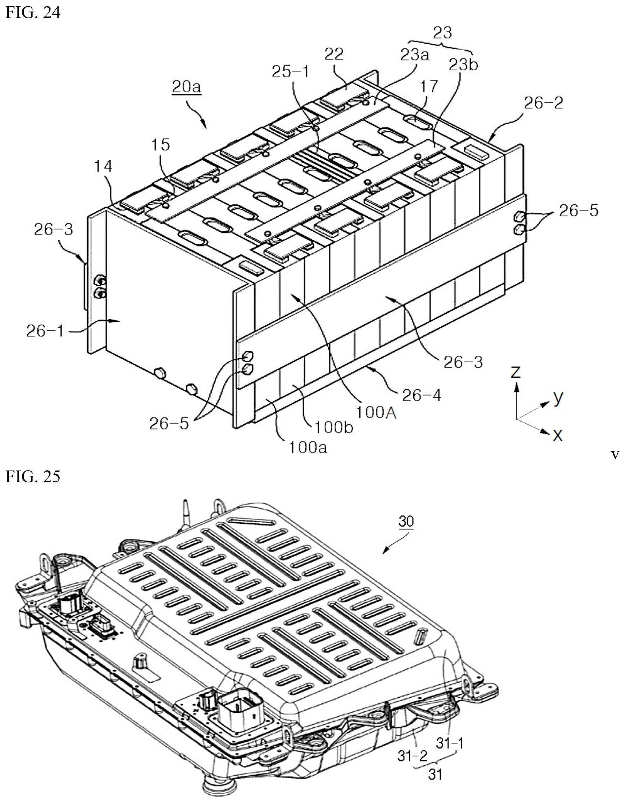

FIG. 24 is a perspective view illustrating a battery module 20a according to one or more embodiments of the present disclosure. Referring to FIG. 24, the battery module 20a according to one or more embodiments of the present disclosure includes terminal parts14 and 15, a plurality of battery cells 100A arranged in one direction, a connection tab 22 connecting a battery cell 100a to an adjacent battery cell 100b, and a protection circuit module 23 having one end connected to the connection tab 22. The protection circuit module 23 may include a battery management system (BMS). Further, the connection tab 22 may include a body portion in contact with the terminal parts 14 and 15 between the adjacent battery cells 100a and 100b and an extension portion extending from the body portion and connected to the protection circuit module 23. The connection tab 22 may be, for example, a bus bar.

Each battery cell 100A may include a battery case, an electrode assembly received (or accommodated) in the battery case, and an electrolyte. The electrode assembly and the electrolyte react electrochemically to store and release (e.g., generate) energy. The terminal parts 14 and 15 electrically connected to the connection tab 22 and a vent 17 as a discharge passage for gas generated inside the battery case may be provided on one side of (e.g., an upper side of) the battery cell 100A. The terminal parts 14 and 15 of the battery cell 100A may be a positive electrode terminal 14 and a negative electrode terminal 15 having different polarities from each other, and the terminal parts 14 and 15 of the adjacent battery cells 100a and 100b may be electrically connected to each other in series or parallel by the connection tab 22, to be described in more detail below. Although a serial connection has been described as an example, the connection structure is not limited thereto, and various connection structures may be employed as desired or necessary. In addition, the number and arrangement of battery cells is not limited to the structure shown in FIG. 24 and may be changed as desired or necessary.

The plurality of battery cells 100A may be arranged in (e.g., may be stacked in) one direction so that the wide surfaces of the battery cells 100a and 100b face each other, and the plurality of battery cells 100A may be fixed by the housings 26-1, 26-2, 26-3, and 26-4. The housings 26-1, 26-2, 26-3, and 26-4 may include a pair of end plates 26-1 and 26-2 facing the wide surfaces of the battery cell 100A and a side plate 26-3 and a bottom plate 26-4 connecting the pair of end plates 26-1 and 26-2 to each other. The side plate 26-3 may support side surfaces of the battery cells 100A, and the bottom plate 26-4 may support bottom surfaces of the battery cells 100A. In addition, the pair of end plates 26-1 and 26-2, the side plate 26-3 and the bottom plate 26-4 may be connected by bolts 26-5 and/or any other suitable fastening members and methods known to those of ordinary skill in the art.

The protection circuit module 23 may have electronic components and protection circuits mounted thereon and may be electrically connected to connection tabs 22, to be described in more detail later. The protection circuit module 23 includes a first protection circuit module 23a and a second protection circuit module 23b extending along the direction in which the plurality of battery cells 100A are arranged in different locations. The first protection circuit module 23a and the second protection circuit module 23b may be spaced from each other at a suitable interval (e.g., a predetermined interval) and arranged parallel to each other to be electrically connected to adjacent connection tabs 22, respectively. For example, the first protection circuit module 23a extends on one side of the upper portion of the plurality of battery cells 100A along the direction in which the plurality of battery cells 100A are arranged, and the second protection circuit module 23b extends on the other side of the upper portion of the plurality of battery cells 100A along the direction in which the plurality of battery cells 100A are arranged. The second protection circuit module 23b may be spaced from the first protection circuit module 23a at a suitable interval (e.g., a predetermined interval) with the vents 17 interposed therebetween but may be disposed parallel to the first protection circuit module 23a. As such, the two protection circuit modules are spaced from each other side-by-side along the direction in which the plurality of battery cells 100A are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 23a and the second protection circuit module 23b may be connected to each other by a conductive connection member 25-1. One side of the conductive connection member 25-1 is connected to the first protection circuit module 23a, and the other side thereof is connected to the second protection circuit module 23b so that the two protection circuit modules 23a and 23b can be electrically connected with each other.

The connection may be performed by any one of soldering, resistance welding, laser welding, projection welding and/or any other suitable connection methods known to those of ordinary skill in the art.

In addition, the connection member 25-1 may be, for example, an electric wire. In addition, the connection member 25-1 may be made of a material having elasticity or flexibility. By the connecting member 25-1, it may be possible to check and manage whether the voltage, temperature, and/or current of the plurality of battery cells 100A are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 25-1.

In addition, when the battery cell 100A swells, shocks may be absorbed by the elasticity or flexibility of the connection member 25-1, thereby preventing the first and second protection circuit modules 23a and 23b from being damaged.

In addition, the shape and structure of the connection member 25-1 is not limited to the shape and structure shown in FIG. 24.

As described above, because the protection circuit module 23 is provided as the first and second protection circuit modules 23a and 23b, the area of the PCB constituting the protection circuit module can be reduced or minimized, and the space inside the battery module can be secured, which improves work efficiency by facilitating a fastening work for connecting the connection tab 22 and the protection circuit module 23 and repair work if (or when) an abnormality is detected in the battery module.

Additionally, although the secondary battery 100A according to the above-described embodiment may be implemented as a single cell, it may also be employed to manufacture a battery pack comprising a plurality of cells, or to manufacture a larger battery pack by increasing the size of the battery cell. As used herein, the terms "secondary battery" and "battery" have the same meaning and are different only in expression for convenience of description.

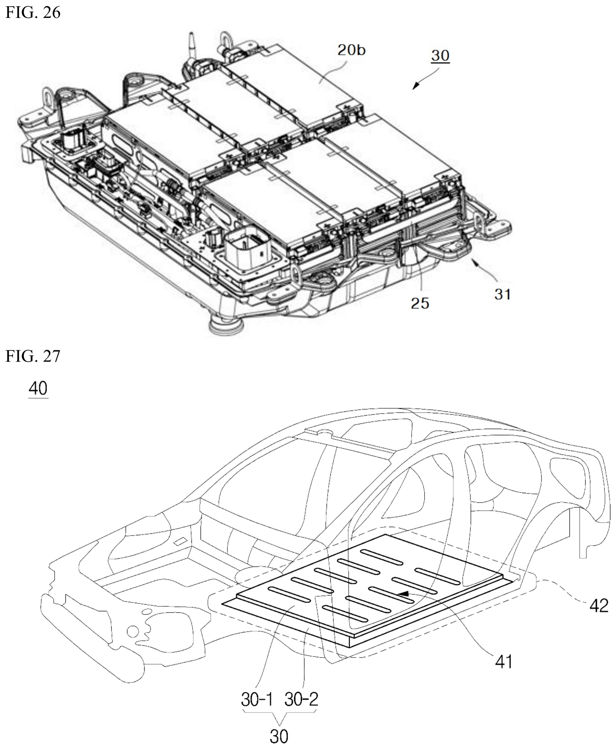

FIGS. 25 and 26 illustrate perspective views of an example of a battery pack 30. The battery pack 30 may include a plurality of battery modules 20b and a housing 31 for accommodating the plurality of battery modules 20b. For example, the housing 31 may include first and second housings 31-1 and 31-2 coupled in opposite directions through the plurality of battery modules 20b. The plurality of battery modules 20b may be electrically connected to each other by using a bus bar 25, and the plurality of battery modules 20b may be electrically connected to each other in a series/parallel or series-parallel mixed method, thereby obtaining desired (e.g., required) electrical output.

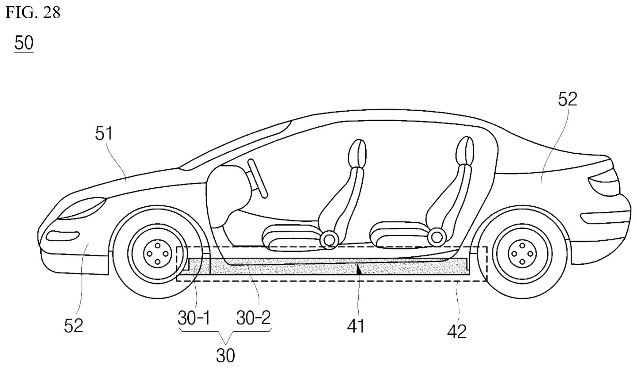

FIGS. 27 and 28 illustrate perspective and side views of examples of a vehicle body 40 and a vehicle components. In FIG. 27, a battery pack 30 may include a battery pack cover 30-1, which is a part of a vehicle underbody 41, and a pack frame 30-2 located under the vehicle underbody 41. In some examples, the battery pack cover 30-1 may correspond to the first housing 31-1, and the pack frame 30-2 may correspond to the second housing 31-2. The pack frame 30-2 and the battery pack cover 30-1 may be integrally formed with a vehicle floor 42. The vehicle underbody 41 separates the inside and outside of a vehicle, and the pack frame 30-2 may be located outside the vehicle.

Referring to FIG. 28, a vehicle 50 may be formed by combining additional parts, such as a hood 51 in front of the vehicle and fenders 52 respectively located in the front and rear of the vehicle to a vehicle body 40. The vehicle 50 may include the battery pack 30 that include the battery pack cover 30-1 and the pack frame 30-2, and the battery pack 30 may be coupled to the vehicle body 40.

As is apparent from the above description, according to embodiments of the present disclosure, a concave portion may be provided in a section of an electrode plate when electrolyte impregnation does not properly occur, and electrolyte impregnation characteristics may be improved. Therefore, the rate capability (i.e., capacity retention under high C-rate charge/discharge conditions) may be improved.

However, the aspects and features of the present disclosure are not limited to those described above, and other aspects and features not expressly described herein will be clearly understood by a person skilled in the art from the description of example embodiments of the present disclosure described below.

Although the present disclosure has been described with reference to embodiments and drawings illustrating aspects thereof, the present disclosure is not limited thereto. Various modifications and variations can be made by a person skilled in the art to which the present disclosure belongs.

In the following, further preferred embodiments are described to facilitate understanding:
1. An electrode plate comprising:
   an electrode current collector; and
   an active material layer coated on at least one surface of the electrode current collector,
   wherein the active material layer includes a concave portion disposed in a pattern on at least a part of the active material layer.
2. The electrode plate as in embodiment 1, wherein the concave portion has any one of a circular recess cross-sectional structure, a triangular recess cross-sectional structure, and a prismatic recess cross-sectional structure.
3. The electrode plate according to any one of the preceding embodiments, wherein the concave portion has at least two of a circular recess cross-sectional structure, a triangular recess cross-sectional structure, and a prismatic recess cross-sectional structure.
4. The electrode plate according to any one of the preceding embodiments, wherein the concave portion comprises any one of a dot pattern, a diagonal pattern, a transverse stripe pattern, a longitudinal stripe pattern, and a plaid pattern.
5. The electrode plate according to any one of the preceding embodiments, wherein the concave portion comprises at least two of a dot pattern, a diagonal pattern, a transverse stripe pattern, a longitudinal stripe pattern, and a plaid pattern.
6. The electrode plate according to any one of the preceding embodiments, wherein the concave portion is provided in an entirety of only one surface of the active material layer.
7. The electrode plate according to any one of the preceding embodiments, wherein the concave portion is provided in some areas of one surface of the active material layer and not in other areas of the one surface of the active material layer.
8. The electrode plate as in embodiment 7, wherein a width of the some areas where the concave portion is provided is 20% to 60% of a width of the active material layer.
9. The electrode plate according to any one of the preceding embodiments when combined with embodiment 7, wherein the concave portion is provided on the one surface of the active material layer along a longitudinal centerline of the electrode current collector.
10. The electrode plate according to any one of the preceding embodiments when combined with embodiment 7, wherein the concave portion includes a plurality of concave portions provided on the one surface of the active material layer so as to be spaced at regular intervals along a longitudinal centerline of the electrode current collector.
11. The electrode plate according to any one of the preceding embodiments when combined with embodiment 7, wherein the concave portion includes a plurality of concave portions provided on the one surface of the active material layer, the plurality of concave portions provided in a zigzag pattern with respect to a longitudinal centerline of the electrode current collector.
12. The electrode plate according to any one of the preceding embodiments when combined with embodiment 7, wherein the concave portion includes a plurality of concave portions provided on the one surface of the active material layer, the plurality of concave portions provided on the one surface of the active material layer being in a checkerboard pattern.
13. The electrode plate according to any one of the preceding embodiments, wherein a depth of the concave portion is less than or equal to a maximum thickness of the active material layer.
14. The electrode plate according to any one of the preceding embodiments, wherein the concave portion is formed through at least a part of the active material layer in a thickness direction.
15. The electrode plate according to any one of the preceding embodiments, wherein the active material layer includes:
   a first active material layer coated on a first surface of the electrode current collector; and
   a second active material layer coated on a second surface of the electrode current collector.
16. The electrode plate as in embodiment 15, wherein a first concave portion and a second concave portion are formed, in a same shape, respectively in the first active material layer and the second active material layer.
17. The electrode plate as in embodiment 15 or embodiment 16, wherein a first concave portion is formed in the first active material layer in one shape, and wherein a second concave portion is formed in the second active material layer in a different shape than the one shape.
18. The electrode plate according to any one of the preceding embodiments, wherein the active material layer is a dry active material layer, and wherein the electrode current collector is provided on one surface of the dry active material layer or provided between the one surface and another surface opposite of the one surface.
19. The electrode plate as in embodiment 18, wherein the electrode current collector has a shape selected from among a sheet, a foil, a film, a plate, a porous body, a mesoporous body, a body containing a through-hole, a polygonal ring body, a mesh body, a foam body, and a nonwoven body.
20. A secondary battery comprising:
   a first electrode plate;
   a second electrode plate; and
   an electrolyte disposed between the first electrode plate and the second electrode plate, wherein the first electrode plate, the second electrode plate, or a combination of
   the first electrode plate and the second electrode plate is the electrode plate for secondary batteries according to any one of the preceding embodiments.

## Claims

1. An electrode plate (1000) comprising:
an electrode current collector; and
an active material layer coated on at least one surface of the electrode current collector,
wherein the active material layer includes a concave portion (1210, 2210, 3210, 4210, 5210, 6210-6212, 7210-7213, 8210, 9210) disposed in a pattern on at least a part (14, 15) of the active material layer.

2. The electrode plate (1000) as claimed in claim 1, wherein the concave portion (1210, 2210, 3210, 4210, 5210, 6210-6212, 7210-7213, 8210, 9210) has any one of a circular recess cross-sectional structure, a triangular recess cross-sectional structure, and a prismatic recess cross-sectional structure.

3. The electrode plate (1000) according to any one of the preceding claims, wherein the concave portion (1210, 2210, 3210, 4210, 5210, 6210-6212, 7210-7213, 8210, 9210) has at least two of a circular recess cross-sectional structure, a triangular recess cross-sectional structure, and a prismatic recess cross-sectional structure.

4. The electrode plate (1000) according to any one of the preceding claims, wherein the concave portion (1210, 2210, 3210, 4210, 5210, 6210-6212, 7210-7213, 8210, 9210) comprises any one of a dot pattern, a diagonal pattern, a transverse stripe pattern, a longitudinal stripe pattern, and a plaid pattern.

5. The electrode plate (1000) according to any one of the preceding claims, wherein the concave portion (1210, 2210, 3210, 4210, 5210, 6210-6212, 7210-7213, 8210, 9210) comprises at least two of a dot pattern, a diagonal pattern, a transverse stripe pattern, a longitudinal stripe pattern, and a plaid pattern.

6. The electrode plate (1000) according to any one of the preceding claims, wherein the concave portion (1210, 2210, 3210, 4210, 5210, 6210-6212, 7210-7213, 8210, 9210) is provided in an entirety of only one surface of the active material layer.

7. The electrode plate (1000) according to any one of the preceding claims, wherein the concave portion is provided in some areas of one surface of the active material layer and not in other areas of the one surface of the active material layer, wherein preferably a width of the some areas where the concave portion (1210, 2210, 3210, 4210, 5210, 6210-6212, 7210-7213, 8210, 9210) is provided is 20% to 60% of a width of the active material layer.

8. The electrode plate (1000) according to claim 7, wherein the concave portion (1210, 2210, 3210, 4210, 5210, 6210-6212, 7210-7213, 8210, 9210) is provided on the one surface of the active material layer along a longitudinal centerline of the electrode current collector, wherein preferably the concave portion (1210, 2210, 3210, 4210, 5210, 6210-6212, 7210-7213, 8210, 9210) includes a plurality of concave portions (1210, 2210, 3210, 4210, 5210, 6210-6212, 7210-7213, 8210, 9210) provided on the one surface of the active material layer so as to be spaced at regular intervals along a longitudinal centerline of the electrode current collector.

9. The electrode plate (1000) according to any one of the preceding claims when combined with claim 7, wherein the concave portion (1210, 2210, 3210, 4210, 5210, 6210-6212, 7210-7213, 8210, 9210) includes a plurality of concave portions (1210, 2210, 3210, 4210, 5210, 6210-6212, 7210-7213, 8210, 9210) provided on the one surface of the active material layer, the plurality of concave portions (1210, 2210, 3210, 4210, 5210, 6210-6212, 7210-7213, 8210, 9210) provided in a zigzag pattern with respect to a longitudinal centerline of the electrode current collector.

10. The electrode plate (1000) according to any one of the preceding claims when combined with claim 7, wherein the concave portion (1210, 2210, 3210, 4210, 5210, 6210-6212, 7210-7213, 8210, 9210) includes a plurality of concave portions (1210, 2210, 3210, 4210, 5210, 6210-6212, 7210-7213, 8210, 9210) provided on the one surface of the active material layer, the plurality of concave portions (1210, 2210, 3210, 4210, 5210, 6210-6212, 7210-7213, 8210, 9210) provided on the one surface of the active material layer being in a checkerboard pattern.

11. The electrode plate (1000) according to any one of the preceding claims, wherein the concave portion (1210, 2210, 3210, 4210, 5210, 6210-6212, 7210-7213, 8210, 9210) is formed through at least a part (14, 15) of the active material layer in a thickness direction.

12. The electrode plate (1000) according to any one of the preceding claims, wherein the active material layer includes:
a first active material layer (1200, 2200, 3200, 4200, 5200, 6200, 7200, 8200, 9200) coated on a first surface of the electrode current collector; and
a second active material layer (1300) coated on a second surface of the electrode current collector, wherein preferably a first concave portion and a second concave portion are formed, in a same shape, respectively in the first active material layer (1200, 2200, 3200, 4200, 5200, 6200, 7200, 8200, 9200) and the second active material layer (1300).

13. The electrode plate (1000) as claimed in claim 12, wherein a first concave portion is formed in the first active material layer (1200, 2200, 3200, 4200, 5200, 6200, 7200, 8200, 9200) in one shape, and wherein a second concave portion is formed in the second active material layer (1300) in a different shape than the one shape.

14. The electrode plate (1000) according to any one of the preceding claims, wherein the active material layer is a dry active material layer, and wherein the electrode current collector is provided on one surface of the dry active material layer or provided between the one surface and another surface opposite of the one surface, wherein preferably the electrode current collector has a shape selected from among a sheet, a foil, a film, a plate (130, 140, 160, 160a), a porous body, a mesoporous body, a body (40) containing a through-hole, a polygonal ring body, a mesh body, a foam body, and a nonwoven body.

15. A secondary battery (100, 100A) comprising:
a first electrode plate (111);
a second electrode plate (112); and
an electrolyte disposed between the first electrode plate (111) and the second electrode plate (112), wherein the first electrode plate (111), the second electrode plate (112), or a combination of the first electrode plate (111) and the second electrode plate (112) is the electrode plate (1000) for secondary batteries according to any one of the preceding claims.
